# EUROPÄISCHE PATENTSCHRIFT

(11) **EP 1 929 589 B1**
(45) Veröffentlichungstag und Bekanntmachung des Hinweises auf die Patenterteilung: **09.09.2009**
(21) Anmeldenummer: 06764156.3
(22) Anmeldetag: 13.07.2006
(51) Int. Cl.: H01R 13/631, H01R 12/08, F02M 51/00, H01R 25/00, H01R 13/04

(54) **STECKERLEISTE**
MULTIWAY CONNECTOR
CONNECTEUR MULTIPOINTS

(30) Priorität: 27.09.2005 DE 102005046152
(43) Veröffentlichungstag der Anmeldung: 11.06.2008
(73) Patentinhaber: Continental Automotive GmbH, 30165 Hannover (DE)
(72) Erfinder: JANISCH, Christian, 93133 Burglengenfeld (DE); FINK, Martin, 90427 Nürnberg (DE)
(86) Internationale Anmeldenummer: PCT/EP2006/064202
(87) Internationale Veröffentlichungsnummer: WO 2007/036373

(56) Entgegenhaltungen:
- EP-A2- 0 278 229
- EP-A2- 0 967 693
- WO-A-92/12878
- DE-A1- 4 325 980
- US-B1- 6 357 414

## Beschreibung

Die Erfindung betrifft eine Steckerleiste, insbesondere für Ventile in Automatikgetrieben für Kraftfahrzeuge, mit einem Träger und Ventil-Einzelsteckern.

In Automatikgetrieben werden in der eingebauten Hydraulik Ventile eingesetzt, die durch integrierte Steuerelektroniken kontaktiert werden. Die einzelnen Ventilkontakte sind in den meisten Fällen in einer Reihe angeordnet, aber aufgrund der sich summierenden Einzeltoleranzen, die sich aus verschiedenen Fertigungsprozessen, Technologien, Materialien und Abmaßen ergeben, können sie nicht durch eine starre Steckerleiste zusammen kontaktiert werden. Es ist daher in allen drei Raumrichtungen eine gewisse Flexibilität notwendig, wobei die X-Richtung der Flachkontakt-Stanzrichtung entspricht, die Y-Richtung quer zur Steckrichtung verläuft und somit der Flachkontaktbreitenrichtung entspricht und die Z-Richtung die Steckrichtung ist. In X- und Y-Richtung addieren sich die Toleranzen im Millimeterbereich, die durch das Stecksystem abgefangen werden müssen. In Z-Richtung wird die Toleranzkette durch die Kontaktüberdeckung kompensiert, aber es wird trotzdem ein Ausgleich während des Betriebes aufgrund von Reibkorrosion benötigt. Da die Ventile erst bei der Endmontage in das Getriebe integriert werden, erfolgt ihre Anbringung üblicherweise mittels Steckbefestigungen, die an geeigneter Stelle innerhalb des Getriebes vorgesehen sind.

Eine einfache, aber aufwendige und daher kostenintensive Lösung ist die Kontaktierung mit jeweils einem eigenen Ventilstecker, der flexibel an die Elektronik angebunden ist. Die Flexibilität wird z. B. durch Kabel, flexible Leiterbahnen oder ähnliches erreicht. Wenn der vorhandene Bauraum und die gestellten Anforderungen an das System es zulassen, kann die Flexibilität durch eine volumenbeanspruchende Lösung mittels langen, sich biegenden Stanzgittern erreicht werden. Dieser Lösungsweg beseitigt die Fehlerproblematik hinsichtlich der Reibkorrosion aber nur ungenügend.

Des Weiteren ist eine Umspritzung der Leitungsbahnen aus Spanschutzgründen aufgrund der Erhöhung der Steifigkeit und damit Reduzierung des Toleranzausgleichs nur schwierig umsetzbar und kann zu nicht ausreichenden Ergebnissen führen.

Hiervon ausgehend liegt der vorliegenden Erfindung die Aufgabe zugrunde, eine Steckerleiste für Ventile zu schaffen, die eine toleranzausgleichende Funktion aufweist, leicht zu montieren ist und kostengünstig hergestellt werden kann.

Es wird auf die EP 0 278 229 A2 verwiesen, die alle Merkale des Oberbegriffs von Anspruch 1 zeigt.

Diese Aufgabe wird durch eine Steckerleiste mit den Merkmalen des Patentanspruchs 1 gelöst. Vorteilhafte Aus- und Weiterbildungen, welche einzeln oder in Kombination miteinander eingesetzt werden können, sind der Gegenstand der abhängigen Ansprüche.

Die erfindungsgemäße Steckerleiste für Ventile zeichnet sich dadurch aus, dass jeder Ventil-Einzelstecker mindestens eine Scharnier-Feder aufweist und die gesamte Steckerleiste mit Trägerleiste, Ventil-Einzelstecker, Scharnier-Feder und Wegbegrenzer aus einem Kunststoffspritzteil gefertigt ist. Bei der Steckerleiste handelt es sich somit um einen Gesamtstecker, der in mehrere Ventil-Einzelstecker unterteilt ist, die auf einem Träger sitzen. Der Bereich zwischen Träger und Ventil-Einzelsteckern ist toleranzausgleichend konstruiert. Es sind hier vorzugsweise zwei Scharnier-Federn und ein Wegbegrenzer eingekoppelt. Die Anbindung der vorzugsweise zwei Flachkontakte am Ventil-Einzelstecker findet mittels einer flexiblen Leiterplatte statt. Die Flachkontakte und die flexible Leiterplatte werden beim Steckvorgang kontaktiert. Die Scharnier-Federn gleichen den möglichen großen Versatz in X-Richtung aus. In Y-Richtung wird der Ausgleich hauptsächlich über die Kontaktüberdeckung geschaffen. Mit den Scharnier-Federn kann auch ein Winkelausgleich durchgeführt werden. Die einzelnen Wegbegrenzer gehen beim gemeinsamen Stecken oder Abziehen der Ventile auf Anschlag und leiten nach einer federnden Wegstrecke die Kräfte direkt in den Träger ein. Sowohl beim Kontaktierungsprozess, dies ist im Allgemeinen ein Schweißprozess der Ventil-Einzelstecker mit der flexiblen Leiterplatte, als auch beim weiteren Fertigungs- und Montageprozess kann durch die deutliche Verringerung der Teileanzahl der Handhabungs- und Sorgfaltsaufwand erheblich reduziert werden. Die Reduzierung der Teileanzahl führt zu einer Erhöhung der Teilefunktionalität und somit zu einer Fertigungs- und Montagevereinfachung. Der Toleranzausgleich findet durch die Steckerleiste ohne Einschränkung in technischer Hinsicht statt. Die Integration des Toleranzausgleichs in die Steckerleiste führt zu einer Kostenreduzierung. Die Anzahl der zu kontaktierenden Ventile schränkt die Anwendbarkeit der Steckerleiste nicht ein, da die Anzahl der Ventil-Einzelstecker auf die jeweiligen Anforderungen angepasst werden kann.

Vorzugsweise weist der Ventil-Einzelstecker einen Wegbegrenzer auf, der beim Stecken oder Abziehen des Ventils auf Anschlag geht und nach einer federnden Wegstrecke die Kräfte direkt in den Träger leitet. Der Wegbegrenzer übernimmt somit eine stabilisierende Funktion, in der in allen drei Raumrichtungen flexiblen bzw. toleranzausgleichenden Steckerleiste.

Es ist bevorzugt, wenn der Einzel-Ventilstecker Flachkontakte aufweist, die eine sichere elektrische Kontaktierung zum Ventil ermöglichen.

Des Weiteren ist bevorzugt, dass die Ventilstecker durch eine flexible Leiterplatte elektrisch kontaktierbar sind. Flexible Leiterplatten, wie z. B. Flexfolien können auf die jeweiligen geometrischen Anforderungen der Steckerleiste abgestellt werden und bieten somit eine variable Kontaktierungsmöglichkeit.

Es ist von Vorteil, wenn die flexible Leiterplatte durch eine Kontaktklemme am Ventilstecker fixiert ist, so dass eine sichere elektrische Kontaktierung zwischen Ventilstecker und flexibler Leiterplatte gegeben ist.

Die vorliegende Erfindung schafft erstmals vorteilhaft eine Steckerleiste mit toleranzausgleichender Funktion, die leicht zu montieren ist und durch ihre Einteiligkeit leicht hergestellt werden kann. Sie eignet sich insbesondere für Anwendungen im Automobilbereich.

Weitere Vorteile und Ausführungen der Erfindung werden nachfolgend anhand von Ausführungsbeispielen sowie anhand der Zeichnungen erläutert.

Dabei zeigen schematisch:
- FIG. 1: in einer perspektivischen Darstellung eine erfindungsgemäße Steckerleiste mit Kontaktklemmen und einer flexiblen Leiterplatte zur elektrischen Kontaktierung;
- FIG. 2: in einer perspektivischen Darstellung die Steckerleiste nach FIG. 1 mit angelegter flexibler Leiterplatte teilweise ohne Kontaktklemmen;
- FIG. 3: in einer perspektivischen Darstellung die Befestigung der Kontaktklemme am Ventil-Einzelstecker;
- FIG. 4: in einer perspektivischen Darstellung am VentilEinzelstecker angeordnete Scharnier-Federn sowie einen Wegbegrenzer;
- FIG. 5: in einer perspektivischen Darstellung einen vergrößert dargestellten Ausschnitt zweier Ventil-Einzelstecker der erfindungsgemäßen Steckerleiste; und
- FIG. 6: in einer perspektivischen Darstellung eine Rückansicht der Ventil-Einzelstecker nach FIG. 5.

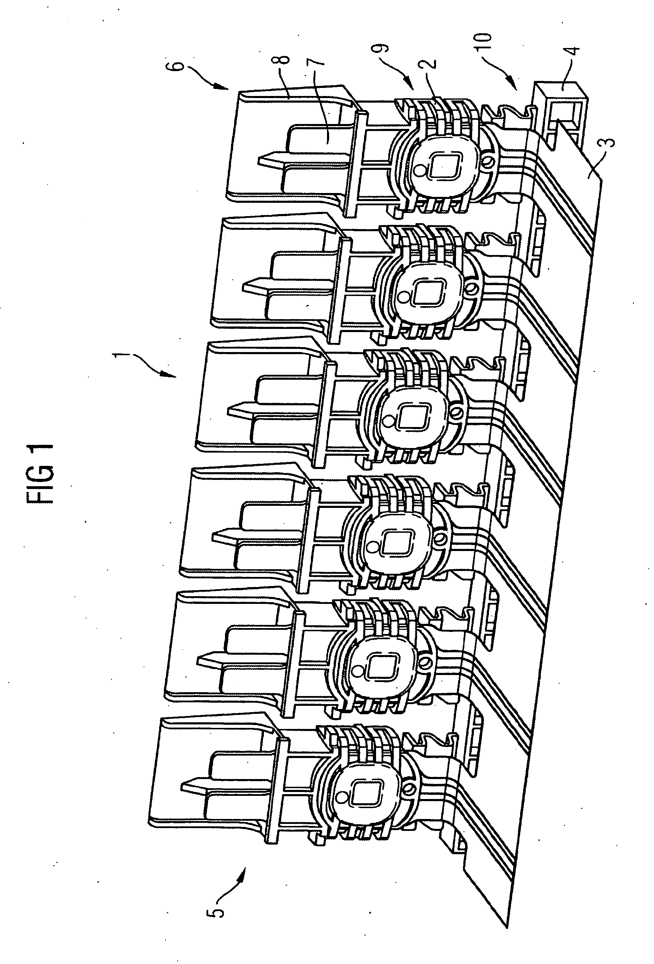

FIG. 1 zeigt in einer perspektivischen Darstellung eine erfindungsgemäße Steckerleiste 1 für Ventile mit Kontaktklemmen 2 und einer flexiblen Leiterplatte 3 zur elektrischen Kontaktierung der Ventile. Die Steckerleiste 1 weist einen Träger 4 auf, auf welchem Ventil-Einzelstecker 5 angeordnet sind. Die Ventil-Einzelstecker 5 weisen drei funktionelle Baueinheiten auf. Die erste funktionelle Baueinheit ist als Steckbereich 6 für die Ventile ausgebildet und umfasst im wesentlichen vorzugsweise zwei zungenartig ausgebildete Flachkontakte 7 sowie zu den Flachkontakten 7 gegenüberliegend angeordnet eine Rückenwand 8. Die Ventile werden zwischen Flachkontakt 7 und Rückenwand 8 fest fixiert. Der Steckbereich 6 mündet in den elektrischen Kontaktierungsbereich 9, an welchen die flexible Leiterplatte 3 angelegt wird, die durch die elektrische Kontaktklemme 2 fixiert wird. Der elektrische Kontaktierungsbereich 9 geht schließlich in den flexiblen, toleranzausgleichenden Bereich 10 über, der direkt auf Träger 4 angeordnet ist.

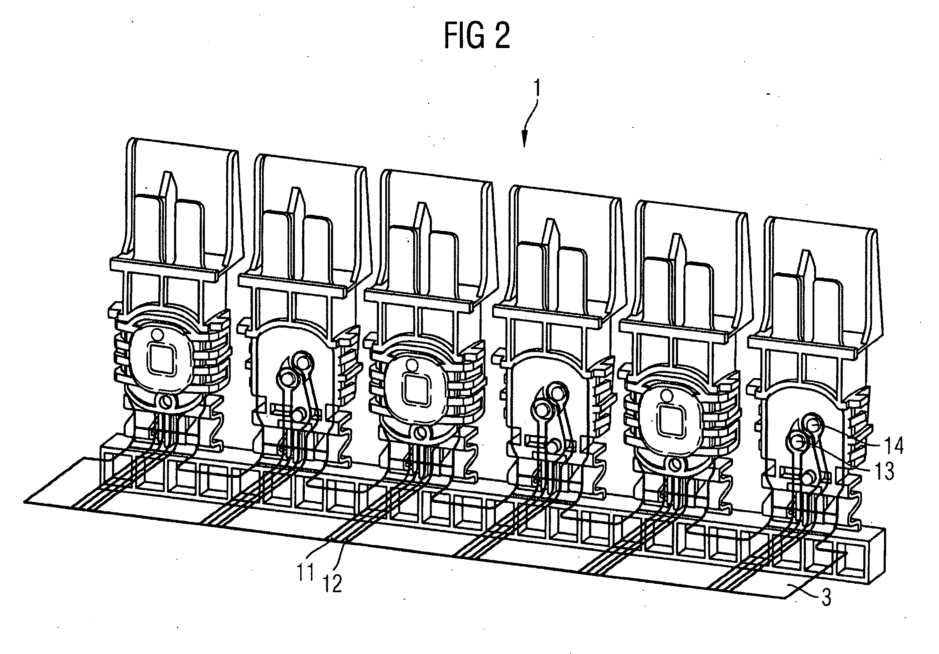

FIG. 2 zeigt in einer perspektivischen Darstellung die Steckerleiste 1 mit angelegter flexibler Leiterplatte 3. Die flexible Leiterplatte 3 kontaktiert jeden Ventil-Einzelstecker 5 durch zwei elektrische Leitungen 11, 12, die am jeweils elektrischen Kontaktierungsbereich 9 jedes Ventil-Einzelsteckers 5 in vorzugsweise punktförmige elektrische Endleitungspunkte 13, 14 münden.

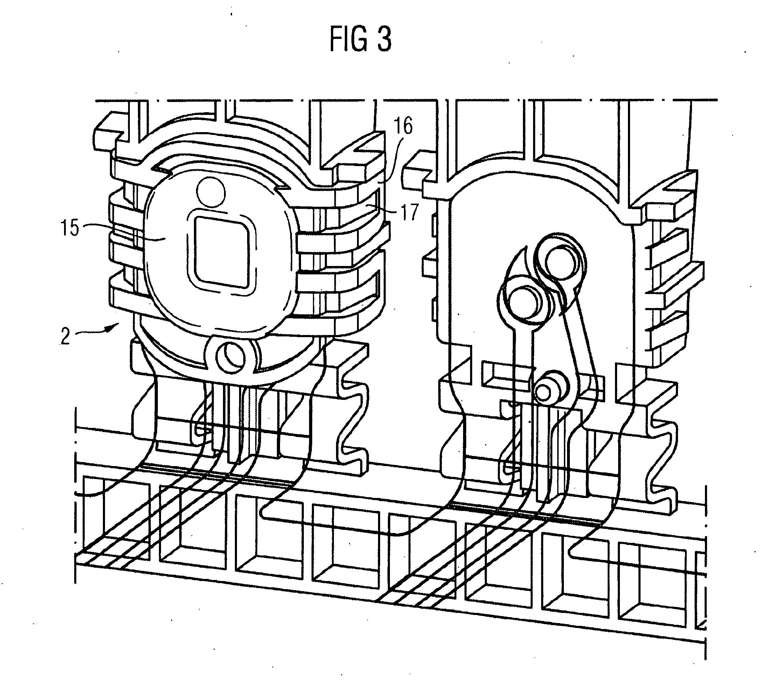

FIG. 3 zeigt in einer perspektivischen Darstellung die Befestigung der Kontaktklemmen 2 am Ventil-Einzelstecker 5. Die Kontaktklemme 2 weist eine ebene Kontaktierungsfläche 15 auf, die ermöglicht, dass die flexible Leiterplatte zwischen Kontaktierungsbereich 9 des Ventil-Einzelsteckers 5 und Kontaktierungsfläche 15 der Kontaktklemme 2 gelagert ist. Die positionssichere Fixierung der Kontaktklemme 2 am Ventil-Einzelstecker 5 wird durch seitliche, vorzugsweise um 90° umgebogene Verrastungstaschen 16 ermöglicht, in welche im Kontaktierungsbereich 9 angeordnete Verrastungsvorsprünge 17 eingreifen können. Zur sicheren Positionierung der Kontaktklemme 2 sind an zwei gegenüber liegenden Seiten jeweils vorzugsweise zwei Verrastungstaschen 16 vorgesehen.

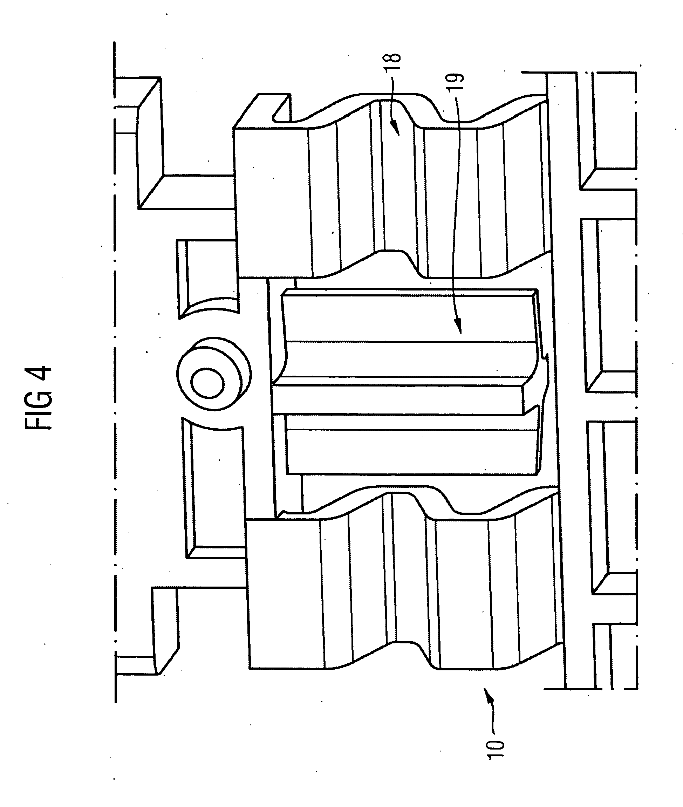

FIG. 4 zeigt in einer perspektivischen Darstellung zwei Scharnier-Federn 18 sowie einen Wegbegrenzer 19 am Ventil-Einzelstecker 5. Die Scharnier-Feder 18 und der Wegbegrenzer 19 bilden den flexiblen, toleranzausgleichenden Bereich 10 des Ventil-Einzelsteckers 5. Vorzugsweise weist jeder Ventil-Einzelstecker 5 zwei an den Seiten angeordnete Scharnier-Federn 18 auf, die vorzugsweise mäanderartig und elastisch ausgebildet sind. Mittig zu den Scharnier-Federn 18 ist der Wegbegrenzer 19 angeordnet, der vorzugsweise kreuzförmig ausgebildet ist, so dass er in alle vier Raumrichtungen eine stabile Wegbegrenzung beim Einstecken der Ventile ermöglicht.

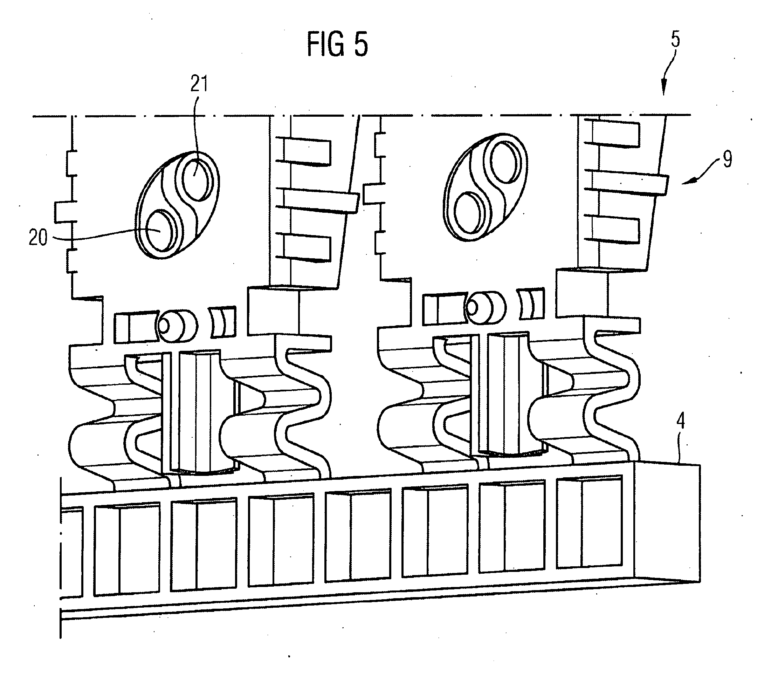

FIG. 5 zeigt in einer perspektivischen Darstellung einen Ausschnitt zweier Ventil-Einzelstecker 5 der erfindungsgemäßen Steckerleiste 1. Dargestellt sind die Kontaktierungspunkte 20, 21 am elektrischen Kontaktierungsbereich 9, die, nachdem die flexible Leiterplatte 3 am Ventil-Einzelstecker 5 fixiert wurde, von den elektrischen Endleitungspunkten 13, 14 der Leiterplatte 3 beaufschlagt werden.

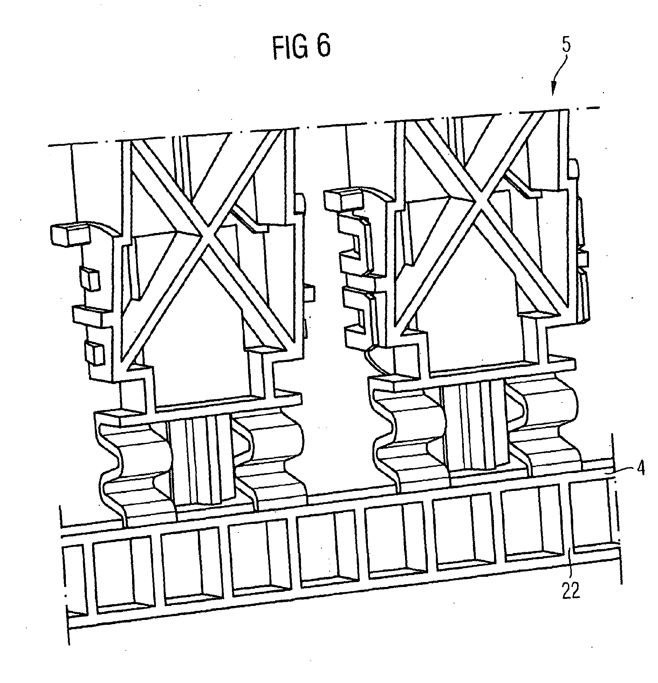

FIG. 6 zeigt in einer perspektivischen Darstellung eine Rückansicht der Ventil-Einzelstecker 5. Zur Stabilisierung des Trägers 4 beim Einsteckvorgang der Ventile sind im Träger 4 vorzugsweise parallel zueinander angeordnete Abstandshalter 22 angeordnet.

Die vorliegende Erfindung schafft erstmals vorteilhaft eine Steckerleiste mit toleranzausgleichender Funktion, die leicht zu montieren ist und durch ihre Einteiligkeit leicht hergestellt werden kann. Sie eignet sich insbesondere für Anwendungen im Automobilbereich.

## Patentansprüche

1. Steckerleiste (1), insbesondere für Ventile in Automatikgetrieben für Kraftfahrzeugen, mit einem Träger (4) und Ventil-Einzelsteckern (5), wobei die Steckerleiste (1) insgesamt aus einem einzigen Kunststoffspritzteil gefertigt ist, **dadurch gekennzeichnet, dass** die Ventil-Einzelstecker (5) toleranzausgleichende Scharnier-Federn (18) aufweisen.

2. Steckerleiste (1) nach Anspruch 1, **dadurch gekennzeichnet, dass** der Ventil-Einzelstecker (5) einen Wegbegrenzer (19) aufweist.

3. Steckerleiste (1) nach einem der vorhergehenden Ansprüche, **dadurch gekennzeichnet, dass** der Ventil-Einzelstecker (5) Flachkontakte (7) aufweist.

4. Steckerleiste (1) nach einem der vorhergehenden Ansprüche, **dadurch gekennzeichnet, dass** die Ventil-Einzelstecker (5) durch eine flexible Leiterplatte (3) elektrisch kontaktierbar sind.

5. Steckerleiste (1) nach Anspruch 4, **dadurch gekennzeichnet, dass** die flexible Leiterplatte (3) durch eine Kontaktklemme (2) am Ventil-Einzelstecker (5) fixiert ist.

## Claims

1. Multiway connector (1), in particular for valves in automatic gearboxes for motor vehicles, having a support frame (4) and individual valve connectors (5), wherein the multiway connector (1) is produced entirely from a single plastic moulded part, **characterised in that** the individual valve connectors (5) have tolerance-compensating hinge springs.

2. Multiway connector (1) according to claim 1, **characterised in that** the individual valve connector (5) has a path delimiter (19).

3. Multiway connector (1) according to one of the preceding claims, **characterised in that** the individual valve connector (5) has flat contacts (7).

4. Multiway connector (1) according to one of the preceding claims, **characterised in that** the individual valve connectors (5) can be electrically contacted by a flexible printed circuit board (3).

5. Multiway connector (1) according to claim 4, **characterised in that** the flexible printed circuit board (3) is fixed by a contact clamp (2) to the individual valve connector (5).

## Revendications

1. Barrette à fiches (1), en particulier pour soupapes dans des boîtes de vitesses automatiques pour véhicules automobiles, comprenant un support (4) et des fiches individuelles de soupapes (5), la barrette à fiches (1) étant entièrement formée d'une seule pièce de matière plastique moulée, **caractérisée en ce que** les fiches individuelles de soupapes (5) présentent des ressorts-charnières (18) qui compensent les tolérances.

2. Barrette à fiches (1) selon la revendication 1,
**caractérisée en ce que** la fiche individuelle de soupape (5) présente un limiteur de course (19).

3. Barrette à fiches (1) selon une des revendications précédentes, **caractérisée en ce que** la fiche individuelle de soupape (5) présente des contacts plats (7).

4. Barrette à fiches (1) selon une des revendications précédentes, **caractérisée en ce que** les fiches individuelles de soupapes (5) peuvent être mises en contact électrique par une carte de circuit imprimé flexible (3).

5. Barrette à fiches (1) selon la revendication 4,
**caractérisée en ce que** la carte de circuit imprimé flexible (3) est fixée à la barrette à fiches de soupapes (5) par une borne de contact (2).
